# EUROPÄISCHE PATENTSCHRIFT

(11) **EP 4 051 480 B1**
(45) Veröffentlichungstag und Bekanntmachung des Hinweises auf die Patenterteilung: **13.08.2025**
(21) Anmeldenummer: 20800853.2
(22) Anmeldetag: 30.10.2020
(51) Int. Cl.: B29C 45/17, B29C 45/42, B29C 45/76

(54) **HANDHABUNGSVORRICHTUNG, ENTNAHMESTATION SOWIE VERFAHREN ZUR HANDHABUNG ROHRFÖRMIGER ODER LANGGESTRECKTER SCHALENFÖRMIGER WERKSTÜCKE**
HANDLING DEVICE, REMOVAL STATION, AND METHOD FOR HANDLING TUBULAR OR ELONGATE BOWL-SHAPED WORKPIECES
DISPOSITIF DE MANIEMENT, POSTE DE PRÉLÈVEMENT ET PROCÉDÉ DE MANIEMENT DE PIÈCES TUBULAIRES OU CUPULIFORMES ALLONGÉES

(30) Priorität: 30.10.2019 DE 102019129329
(43) Veröffentlichungstag der Anmeldung: 07.09.2022
(73) Patentinhaber: MA Micro Automation GmbH, 68789 St. Leon-Rot (DE)
(72) Erfinder: WANDURA, Roland, 67117 Limburgerhof (DE); BETZ, Andreas, 67117 Limburgerhof (DE)
(74) Vertreter: Wächter, Jochen
(86) Internationale Anmeldenummer: PCT/EP2020/080562
(87) Internationale Veröffentlichungsnummer: WO 2021/084094

(56) Entgegenhaltungen:
- EP-A2- 0 982 113
- WO-A1-2017/031589
- WO-A1-2018/036857
- WO-A1-2018/072009
- WO-A1-97/47459

## Beschreibung

Die Erfindung betrifft eine Handhabungsvorrichtung für rohrförmige oder langgestreckte schalenförmige Werkstücke wie Pipettenspitzen oder Becher, wobei gegebenenfalls vorgesehen ist, dass diese Werkstücke während ihrer Produktion bis zur Verpackung auf einem Werkstückträger transportiert werden oder transportierbar sind, wobei der Werkstückträger rasterförmig zueinander angeordnete Aufnahmeplätze für die Werkstücke hat, vorzugsweise mit der Maßgabe, dass auf dem Werkstückträger befindliche fehlerhafte Werkstücke detektierbar sind, wobei eine Entnahmestation vorgesehen sein kann oder vorgesehen ist, mit welcher die fehlerhaften Werkstücke von den Aufnahmeplätzen eines Werkstückträgers entfernbar sind, so dass Aufnahmeplätze frei werden, wobei frei gewordene Aufnahmeplätze des Werkstückträgers mittels der Handhabungsvorrichtung mit fehlerfreien Werkstücken bestückbar sind.

Die Handhabungsvorrichtung dient dem Zweck fehlerhafte Werkstücke aus einem Werkstückträger direkt zu entnehmen und die dabei entstehenden Lücken, d.h. die freigewordenen Aufnahmeplätze, mit fehlerfreien "Gut-Werkstücken" aufzufüllen. Dadurch sollen bei nachfolgenden Verarbeitungsschritten Schwierigkeiten an den folgenden Stationen vermieden werden. Bekannt ist es, für die Zeit einer Überprüfung beziehungsweise Entnahme der fehlerhaften Werkstücke den Transport des Werkzeugträgers verlangsamen zu müssen oder gar anzuhalten. Dies ist insbesondere dann problematisch, wenn die Überprüfung beziehungsweise das Entfernen der fehlerhaften Werkstücke relativ viel Zeit beansprucht.

Aus der WO2017031589_A1 ist eine Kühlplattenanordnung bekannt, die umfasst (a) eine Kühlplatte mit einer Plattenvorderseite; (b) einen Luftkanal, der sich innerhalb einer Dicke der Kühlplatte erstreckt; (c) eine Plattenbohrung, die sich von der Plattenvorderseite in die Kühlplatte erstreckt, um eine Fluidverbindung zwischen dem Luftkanal und einem Hohlraum eines Kühlrohrs herstellen, das an der Kühlplatte angebracht werden kann; und (d) ein Ventil innerhalb der Plattenbohrung. Das Ventil ist zwischen einer ersten Position, in der ein erster Luftströmungsdurchgang offen ist, der sich innerhalb der Plattenbohrung erstreckt, um Luft von dem Hohlraum zu dem Luftkanal zu leiten, und einer zweiten Position beweglich, in welcher der erste Luftströmungsdurchgang versperrt ist, um die Luftströmung zwischen dem Hohlraum und dem Luftkanal zu reduzieren, und in der ein zweiter Luftströmungsdurchgang offen ist, welcher sich innerhalb der Plattenbohrung erstreckt, um Luft von dem Luftkanal zu dem Luftkanal zu leiten.

Die WO9747459_A1 betrifft eine Ausstosservorrichtung für eine zur Entnahme von Preforms geeignete Entnahmevorrichtung, mit welcher auf eine sichere Weise angekühlte Preforms aus einem Formwerkzeug entnommen und nach deren Auskühlung ebenso sicher und vollständig wieder aus der Entnahmevorrichtung ausgestossen werden können.

Die WO2018036857_A1 schlägt die Durchführung einer optischen Inspektion von Preformlingen vor, die mittels zumindest einer Kameraeinrichtung derart durchzuführen ist, dass sich die Preformlinge in einer gegenüber einem Spritzgussvorgang unveränderten relativen Lage zueinander befinden.

Aus der WO2018072009_A1 kennt der Fachmann ein Formsystem umfassend eine Inspektionsvorrichtung. Das Formsystem umfasst eine Formmaschine zur Herstellung von mehrschichtigen Vorformlingen mit einer Kernschicht und einer die Kernschicht umhüllenden Hautschicht, eine Triage-Vorrichtung, die so konfiguriert ist, dass sie für einen Teil der mehrschichtigen Vorformlinge mindestens einen Vorformlingsparameter bestimmt und mindestens einen Vorformling für die Inspektion zumindest teilweise auf der Grundlage des Vorformlingsparameters auswählt, und eine Inspektionsvorrichtung, die so konfiguriert ist, dass sie die ausgewählten mehrschichtigen Vorformlinge empfängt und mindestens ein Attribut des mindestens einen aus der Vielzahl der mehrschichtigen Vorformlinge bestimmt.

Der Erfindung liegt die Aufgabe zugrunde eine Handhabungsvorrichtung für rohrförmige oder langgestreckte schalenförmige Werkstücke hinsichtlich der Geschwindigkeit der Handhabung fehlerfreier Werkstücke bei der Auffüllung frei gewordener Aufnahmeplätze eines Werkstückträgers zu verbessern und, sofern eine Entnahmestation umfasst ist, die Geschwindigkeit der Handhabung fehlerhafter Werkstücke ebenfalls zu verbessern, die aus einem Werkstückträger entfernt werden müssen. Ferner liegt der Erfindung die Aufgabe zugrunde, ein entsprechend verbessertes Verfahren zur Handhabung entsprechender Werkstücke bereitzustellen.

Diese Aufgabe wird durch eine Handhabungsvorrichtung nach Anspruch 1, eine Entnahmestation nach Anspruch 11 sowie ein Verfahren nach Anspruch 14 gelöst. Vorteilhafte Ausführungen ergeben sich aus den Unteransprüchen.

Erfindungsgemäß umfasst die Handhabungsvorrichtung ein Nachfüllmagazin, das nebeneinander angeordnete Magazinplätze mit je einem auf und ab bewegbaren Halteelement aufweist, welches zum Festhalten sowie zur Aufnahme und Abgabe je eines fehlerfreien Werkstücks dient, mit der weiteren Maßgabe, dass jeder Magazinplatz eine Führungsröhre umfasst, in dem die Auf- und Abbewegung des Halteelements stattfindet, wobei das Halteelement gemeinsam mit einem festgehaltenen Werkstück zumindest teilweise in die Führungsröhre hineinbewegbar ist, und dass eine Beschleunigungseinrichtung vorgesehen ist, mit der das Werkstück aus der Führungsröhre herausbeschleunigt werden kann und zu einem Aufnahmeplatz des Werkstückträgers bewegbar ist. Mittels der erfindungsgemäßen Handhabungsvorrichtung sind frei gewordene Aufnahmeplätze des Werkstückträgers mit fehlerfreien Werkstücken besonders schnell und zuverlässig bestückbar. Aufgrund des besonders kurzen Bestückungszeit mit fehlerfreien Werkstücken und/oder der besonders kurzen Entnahmezeit fehlerhafter Werkstücke mittels der erfindungsgemäßen Entnahmestation, ist es ermöglicht, dass der Werkstücktransport an der Handhabungsvorrichtung und/oder Entnahmestation nur kurzzeitig unterbrochen oder nur vergleichsweise geringfügig und praktisch nicht verlangsamt wird. Ferner kann hierdurch das Werkstück besonders zielsicher an seinem Aufnahmeplatz angeordnet werden, so dass dieses vorzugsweise unmittelbar seine Solllage an dem Werkstückträger, vorzugsweise auch seine gewünschte räumliche Ausrichtung an diesem, einnimmt. Dadurch kann auch die gesamte Produktionslinie mit integrierter Herstellvorrichtung für die Werkstücke, welche auch eine Prüfvorrichtung zur Prüfung der Werkstücke auf Fehlerfreiheit und/oder eine Verpackungsstation für die Werkstücke umfassen kann, und bei welcher ein kontinuierlicher Werkstücktransport zwischen den Vorrichtungen bzw. den Stationen gegeben ist, mit hoher Produktionsgeschwindigkeit gefahren werden.

Das Nachfüllmagazin ist vorteilhaft relativ zu dem Werkstückträger bewegbar, so dass jeder Magazinplatz des Nachfüllmagazins mit jedem freigewordenen Aufnahmeplatz des Werkstückträgers in Überdeckung gebracht werden kann. Auf diese Weise kann jeder Magazinplatz, der das fehlerfreie Werkstück noch nicht abgegeben hat, mit jedem der frei gewordenen Aufnahmeplätze in Überdeckung gebracht werden, um den entsprechenden Aufnahmeplatz mit einem fehlerfreien Werkstück aufzufüllen. Dies ermöglicht eine schnelle Bestückung des Werkstückträgers mit fehlerfreien Werkstücken. Ferner ist hierdurch die Handhabungsvorrichtung besonders angepasst, um verschiedene Werkstückträger mit unterschiedlichen Rasteranordnungen von Werkstücken zu bestücken.

Vorteilhafterweise können Lücken freigewordener Aufnahmeplätze mit der vorgeschlagenen Handhabungsvorrichtung direkt und schnell aufgefüllt werden. Die Bewegbarkeit des Nachfüllmagazins, welche einen Magazinplatz in Überdeckung bringt mit einem frei gewordenen Aufnahmeplatz, erfolgt ebenso schnell und präzise, wie die Übergabe eines fehlerfreien Werkstücks heraus dem Magazinplatz und hinein in einen freien Aufnahmeplatz eines Werkstückträgers.

Vorzugsweise umfasst die Handhabungsvorrichtung einen Werkstückträger, mit Werkstücken, wobei die Werkstücke mittels der erfindungsgemäßen Handhabungsvorrichtung handhabbar sind. Die Handhabungsvorrichtung ist jedoch ohne einen solchen Werkstückträger eigenständig von der vorliegenden Erfindung umfasst. Vorzugsweise sind diese Werkstücke während ihrer Produktion bis zur Verpackung auf einem Werkstückträger transportierbar oder werden transportiert, wozu eine entsprechende Transportvorrichtung mit Gegenstand der Handhabungsvorrichtung sein kann, die Handhabungsvorrichtung aber auch unabhängig von der Transportvorrichtung Erfindungsgegenstand ist. Der Werkstückträger weist rasterförmig zueinander angeordnete Aufnahmeplätze für die Werkstücke auf.

Vorzugsweise sind die auf dem Werkstückträger befindlichen fehlerhaften Werkstücke detektierbar. Hierzu kann eine geeignete Detektionsvorrichtung vorgesehen sein, welche von an dem Werkstückträger positionierten Werkstücken, welche sich vorzugsweise in ihrer Solllage in Bezug auf den Transport des Werkstückträgers befinden, vorgesehen sein. Die Detektionsvorrichtung kann Teil der Handhabungsvorrichtung sein kann, vorzugsweise ist die Handhabungsvorrichtung unabhängig von einer solchen Detektionsvorrichtung Erfindungsgegenstand. Die Werkstücke sind also eine Fehlerdetektion mittels der Detektionsvorrichtung ermöglichend an dem Werkstückträger angeordnet, also vorzugsweise in einem geeigneten Abstand zueinander und in einer geeigneten, vorzugsweise vordefinierten räumlichen Stellung zueinander, angeordnet.

Vorzugsweise ist eine Entnahmestation vorgesehen, mit welcher die fehlerhaften Werkstücke von den Aufnahmeplätzen eines Werkstückträgers entfernbar sind, so dass Aufnahmeplätze frei werden, wobei frei gewordene Aufnahmeplätze des Werkstückträgers mittels der Handhabungsvorrichtung mit fehlerfreien Werkstücken bestückbar sind.

Die Handhabungsvorrichtung kann die erwähnte Entnahmestation mitumfassen oder sie ist ohne diese ausgeführt und dient dann nur dazu, fehlerfreie Werkstücke aufzunehmen, nämlich aus einem geeigneten Vorrat, und dann leer gewordene Aufnahmeplätze eines Werkstückträgers damit zu besetzen. Außerdem wird die Entnahmestation als solche als eigenständige Erfindung angesehen, mit welcher fehlerhafte Werkstücke von den Aufnahmeplätzen eines Werkstückträgers entfernbar sind.

Die mit der vorgeschlagenen Handhabungsvorrichtung handzuhabenden Werkstücke sind insbesondere Pipettenspitzen und passende Becher. Pipettenspitzen und Becher werden vom Endverbraucher meist paarweise benutzt. Sie kommen z.B. in Laboren zur Untersuchung von medizinischen oder sonstigen Materialproben zum Einsatz. Häufig werden Werkstücke der eingangs genannten Art aus Kunststoff hergestellt, beispielsweise im Spritzgussverfahren. Hierbei kann es zu Produktionsfehlern kommen, die überwacht werden müssen. Einzelne fehlerhafte Werkstücke müssen auf einem Werkstückträger detektiert werden, um sie entfernen und durch fehlerfreie Werkstücke ersetzen zu können.

Die vorgeschlagene Handhabungsvorrichtung ist dazu hergerichtet, ein fehlerfreies Werkstück quasi aus der Führungsröhre eines Nachfüllmagazins heraus zu schießen. Zu dem Zweck wirkt die Führungsröhre wie ein Gewehrlauf, aus dem das Werkstück herausbeschleunigt wird. Die Führungsröhre hat daher einen Querschnitt, der angepasst ist an den Querschnitt des Werkstücks, das darin aufgenommen werden kann und herausbeschleunigt werden können soll. Das Werkstück erhält durch das Führungsrohr eine ausreichend gerade Bewegungsbahn. Hierfür ist eine gewisse Länge der Führung innerhalb des Führungsrohrs erforderlich. Zu dem Zweck wird das Werkstück zumindest teilweise in das Führungsrohr hinein angehoben. Falls nötig kann es gänzlich in das Führungsrohr hineinbewegt werden. Zweckmäßig wird die ganze Länge des Führungsrohres ausgenutzt, um die Beschleunigung des Werkstücks innerhalb des Führungsrohres zu erzeugen. Die Länge des Führungsrohres ist so bemessen, dass das Werkstück mit ausreichender Genauigkeit beziehungsweise mit ausreichender Treffsicherheit den Aufnahmeplatz des Werkstückträgers erreicht. Hierdurch ist vorzugsweise das Werkstück von der Beschleunigungseinrichtung mechanisch entkoppelt, wenn das Werkstück in seinen Aufnahmeplatz an dem Werkstückträger einnimmt, was eine besonders schnelle Arbeitsweise der Handhabungsvorrichtung ermöglicht. Zu dem Zeitpunkt, an welchem das Werkstück die Beschleunigungsrichtung verlässt bzw. von dieser entkoppelt, ist das Werkstück vorzugsweise von seinem Aufnahmeplatz an dem Werkstückträger bspw. räumlich oder in der Höhe beabstandet.

Auf einem Werkstückträger sind üblicherweise Aufnahmeplätze für Werkstücke in einem Raster angeordnet, beispielsweise in mehreren parallelen Reihen. Die Aufnahmeplätze können innerhalb einer Reihe einen Abstand aufweisen, der identisch ist mit dem Abstand, den die Reihen untereinander haben. Des Weiteren können die Aufnahmeplätze benachbarter Reihen ohne Versatz zueinander angeordnet sein und so ein quadratisches Raster bilden.

Sofern das Nachfüllmagazin wenigstens zwei Reihen von Magazinplätzen hat, können die Magazinplätze des Nachfüllmagazins auch in einem Raster angeordnet sein und zweckmäßig stimmt dieses Raster überein mit dem Raster des Werkstückträgers. Dadurch kann die Nachfüllvorrichtung so über dem Werkstückträger positioniert werden, dass die Magazinplätze mit den Aufnahmeplätzen in exakter Überdeckung sind. So kann aus jedem Magazinplatz heraus der überdeckte Aufnahmeplatz mit einem Werkstück bestückt werden.

Zweckmäßig ist die Beschleunigungseinrichtung jeweils mit einem Federdruckelement oder einer Druckluftdüse versehen, so dass dann, wenn das Halteelement in die Führungsröhre hineinbewegt ist, mittels der Beschleunigungseinrichtung ein Kraftstoß auf das Werkstück übertragbar ist. Dadurch wird die Geschwindigkeit der Handhabung der Werkstücke verbessert, indem das Führungsrohr im Prinzip nach Art eines Gewehrlaufes dafür, das Werkstück wie ein Geschoss zu führen, wenn es durch den Kraftstoß aus dem Führungsrohr heraus beschleunigt wird. Die Ausbildung der Beschleunigungseinrichtung mit Druckdüse ist besonders vorteilhaft, da besonders verschleißfrei, einfach an die jeweiligen Erfordernisse wie die Eigenschaften des jeweiligen Werkstückes anpassbar und bspw. besonders für Reinraumbedingungen geeignet.

In den einzelnen Magazinplätzen sind also die fehlerfreien Werkstücke in Führungsrohren vorgehalten. Mittels einer Steuereinrichtung kann die Beschleunigungseinrichtung jedes Magazinplatzes individuell betätigt werden. Auf diese Weise können Werkstücke aus einzelnen Magazinplätzen nach Bedarf herausgeschossen werden. Es können auch mehrere Magazinplätze gleichzeitig betätigt werden, wenn sie gleichzeitig mit leeren Aufnahmeplätzen des Werkstückträgers in Überdeckung sind.

Die Steuereinrichtung dient des Weiteren dazu, die erwähnte Bewegbarkeit des Nachfüllmagazins relativ zu dem Werkstückträger zu steuern, so dass ein geladener Magazinplatz, dessen Führungsrohr mit einem fehlerfreien Werkstück besetzt ist, mit einem leeren Aufnahmeplatz des Werkstückträgers in Überdeckung gebracht werden kann. Sobald diese Überdeckung hergestellt ist kann das fehlerfreie Werkstück aus dem Führungsrohr geschossen werden, um den leeren Aufnahmeplatz des Werkstückträgers damit zu bestücken. Vorzugsweise kann das Nachfüllmagazin so bewegt werden, dass jeder Magazinplatz mit jedem der Aufnahmeplätze des Werkstückträgers in Überdeckung gebracht werden kann. Auf diese Weise ist es möglich, alle Magazinplätze des Nachfüllmagazins zu leeren.

Einfacherweise ist ein Druckluftvorrat vorgesehen sowie ein pneumatisches Schaltventil, um dem Werkstück einen Bewegungsimpuls per Druckluftstoß zu verleihen. Das Schaltventil erhöht die Geschwindigkeit, indem es schnell und präzise arbeitet, vorzugsweise kann ein Schnellschaltventil vorgesehen sein. Dafür wird es kurzzeitig geöffnet und dadurch Druckluft hinein in das Führungsrohr gelassen. In dem Führungsrohr dehnt sich die Druckluft aus und durch die expandierende Luft wird das Werkstück aus dem Führungsrohr getrieben und herausbefördert. Dies ermöglicht eine besonders verschleißfreie Arbeitsweise und ist bspw. besonders für Reinraumbedingungen geeignet.

Einen weiteren Nutzen hat es, wenn jedes heb- und senkbare Halteelement mit einer zusätzlichen Ansaugdüse versehen ist, mit der das Nachfüllmagazin zuverlässig beladbar ist mit fehlerfreien Werkstücken. Die Ansaugdüsen bleiben zweckmäßig dauerhaft eingeschaltet. Wenn eine Druckluftdüse einen Druckstoß abgibt, um ein fehlerfreies Werkstück abzugeben, bleibt die Ansaugdüse auch dann permanent in Betrieb. Der Druckstoß ist ausreichend stark einzustellen, um ein fehlerfreies Werkstück entgegen der Ansaugwirkung der Ansaugdüse aus dem entsprechenden Magazinplatz des Nachfüllmagazins heraus zu beschleunigen. Dies ermöglicht eine besonders schnelle und zuverlässige Arbeitsweise und verschleißarme Ausgestaltung der Vorrichtung, welche bspw. auch für Reinraumbedingungen besonders geeignet ist.

Zweckmäßig sind die Ansaugdüsen mehrerer der heb- und senkbaren Halteelemente über eine gemeinsame Saugleitung verbunden, was als Common-Rail-System bezeichnet werden kann. Es vereinfacht den mechanischen Aufwand und ermöglicht es, wenn das Nachfüllmagazin völlig geleert ist, alle Magazinplätze gleichzeitig mit neuen fehlerfreien Werkstücken nachzuladen. Die fehlerfreien Werkstücke hierfür kommen aus einem geeigneten Vorrat, in welchem sie in einer Rasteranordnung vorgehalten werden, die dem Raster des Nachfüllmagazins entspricht. Auf diese Weise können alle Magazinplätze gleichzeitig und unmittelbar nachgeladen werden, ohne das Nachfüllmagazin zum Nachladen hin und her bewegen zu müssen.

Einfacherweise sind die Druckluftdüse und die Ansaugdüse jeweils koaxial an dem betreffenden heb- und senkbaren Halteelement angeordnet. Dieser symmetrische Aufbau verbessert die Präzision und zielgenaue Abgabe fehlerfreier Werkstücke, welche freigewordene Aufnahmeplätze eines Werkstückträgers auf diese Weise zuverlässig erreichen. Die koaxiale Bauweise erlaubt außerdem einen sehr kompakten Aufbau und vereinfacht die Herstellung. Die Druckluftdüse ist vorteilhaft zentral angeordnet und koaxial dazu kann die Ansaugdüse ringförmig um die Druckdüse angeordnet sein. Eine umgekehrte Anordnung mit der Ansaugdüse zentral angeordnet und der Druckdüse ringförmig um die Ansaugdüse ist grundsätzlich aber auch möglich. Die erstgenannte Anordnung mit der zentralen Druckluftdüse ist jedoch weniger aufwändig und u.a. deswegen vorteilhaft, weil der Querschnitt der Ansaugdüse größer sein sollte als der Querschnitt der Druckdüse, um ausreichend Ansaugströmung zu generieren. Eine Ansaugdüse mit größerem Querschnitt ist ringförmig einfach zu realisieren. Die erstgenannte Anordnung ist daher maschinenbautechnisch leichter zu realisieren. Die größere Querschnittsfläche der ringförmigen Ansaugdüse lässt einen größeren Volumenstrom zu. Dies ist u.a. deswegen zweckmäßig, weil mit einem möglichst nicht so großen Unterdruck gearbeitet werden soll, der relativ zum Luftdruck der umgebenden Atmosphäre ca. 500-800 mbar beträgt, bevorzugt sicherheitshalber 700 bis maximal 800 mbar. Für den Druckstoß der Druckluftdüse ist gegenüber dem Luftdruck der umgebenden Atmosphäre ein Überdruck von 3-10 bar vorgesehen, vorzugsweise 4-8 bar und besonders bevorzugt von 6 bar. Hinzukommt, dass sich für alle Ansaugdüsen ein gemeinsamer Sauganschluss einfach realisieren lässt mit nur einer gemeinsamen quer zu den Ansaugdüsen angeordneten Saugleitung, die mit allen Ansaugdüsen verbunden ist. Die Drucckanäle werden hingegen alle einzeln angesteuert, um individuelle Druckstöße abgeben zu können.

Ein weiterer Nutzen ergibt sich, wenn eine Hubeinrichtung vorgesehen ist, mit der wenigstens eines der heb- und senkbaren Halteelemente auf- und abwärtsbewegbar ist. Diese Maßnahme vermeidet, dass das Nachfüllmagazin als Ganzes auf und ab bewegt werden muss. Es reduziert die Masse, die bewegt werden muss, um ein fehlerfreies Werkstück in das Nachfüllmagazin aufzunehmen und es daraus abzugeben.

Besonders nützlich ist es wenn die Hubeinrichtung ein heb-und senkbares Koppelelement aufweist, wobei mehrere oder alle der heb- und senkbaren Halteelemente mit dem Koppelelement verbunden sind. Auf diese Weise können mit einer einzigen Hubeinrichtung die Halteelemente aller Magazinplätze des Nachfüllmagazins gemeinsam betätigt, d. h. gehoben und gesenkt werden, so dass auf diese Weise mehrere Halteelemente integriert und mittels eines gemeinsamen Koppelelements heb-und senkbar sind.

Eine weitere Verbesserung ergibt sich, wenn die Hubeinrichtung eine Hubführung für das heb- und senkbare Koppelelement vorsieht sowie einen Hubzylinder zum Antrieb der Heb- und Senkbewegung des Koppelelements. Der Antrieb der heb- und senkbaren Halteelemente ist verbessert, indem eine Hubeinrichtung integriert ist, um mehrere beziehungsweise alle Halteelemente damit zu betätigen.

Hilfreich ist weiterhin eine Steuereinrichtung vorgesehen, über welche die gemeinsame Saugleitung für die Ansaugdüsen dann zuschaltbar ist, wenn das Koppelelement eine abgesenkte Position einnimmt, wobei mittels der Steuereinrichtung auch die Druckluftdüsen individuell betätigbar sind. Betätigt werden Druckluftdüsen zweckmäßig dann, wenn sich das Koppelelement in einer angehobenen Position befindet. Damit kann das Werkstück ausreichend tief in das Führungsrohr hineinbewegt werden. Das Halteelement verbessert auf diese Weise das Laden/Beladen der Führungsrohre. Jedes Werkstück ist im Führungsrohr geschützt gespeichert. Die Speicherposition des Werkstücks ist entweder so tief im Führungsrohr, dass es aus der Speicherposition unmittelbar herausgeschossen werden kann oder es wird das Werkstück vor dem Schuss, d.h. vor dem Kraftstoß per Druckluftimpuls, in eine geeignete Schussposition innerhalb des Führungsrohrs bewegt.

Jedes Führungsrohr kann unabhängig von allen anderen Führungsrohren per Druckluftimpuls entladen und das Werkstück herausgeschossen werden, was eine besonders flexible Arbeitsweise ermöglicht.

Die Handhabungsvorrichtung ist nicht zuletzt deswegen besonders effizient, weil sie eine Entnahmestation umfasst, welche unabhängig von dem Nachfüllmagazin operiert und diesem vorgeschaltet ist. Wenn das Nachfüllmagazin zum Einsatz kommt, sind die fehlerhaften Werkstücke bereits von dem Werkstückträger entnommen. Das Nachfüllmagazin hat nur den Zweck, fehlerfreie Werkstücke aufzunehmen und zu speichern und sie gezielt in leere Aufnahmeplätze eines Werkstückträgers einzubringen.

Des Weiteren vorgeschlagen wird eine Entnahmestation für die eingangs erwähnten fehlerhaften Werkstücke wie beispielsweise Pipettenspitzen oder Becher vorgeschlagen. Die Entnahmestation umfasst eine Hebehilfe zum Ausheben der fehlerhaften Werkstücke aus dem Werkstückträger und umfasst eine Entsorgungsleitung zum Abtransport der ausgehobenen fehlerhaften Werkstücke, wobei zwischen der Entsorgungsleitung und der Hebehilfe ein Durchgangsbereich für den Werkstückträger vorgesehen ist.

Wenn ein Werkstückträger in den Durchgangsbereich der Entnahmestation gelangt kann, dann muss vorteilhafterweise der Transport des Werkstückträgers nicht gestoppt werden, um ein fehlerhaftes Werkstück ausheben zu können. Die Hebehilfe kann einen Impuls geben, der das Werkstück aushebt während der Werkstückträger den Durchgangsbereich der Entnahmestation passiert. Es ist nicht erforderlich die Transportgeschwindigkeit des Werkstückträgers zu reduzieren. Selbstverständlich ist es aber möglich, wenn der Werkstückträger den Durchgangsbereich passiert, für diese Passage eine reduzierte Transportgeschwindigkeit einzustellen oder ihn sogar anzuhalten, um fehlerhafte Werkstücke auszuheben.

Die Position eines fehlerhaften Werkstücks ist mit einem geeigneten Detektor ermittelbar. Der Detektor liefert der Steuereinrichtung ein Positionssignal, welches den betreffenden Aufnahmeplatz des Werkstückträgers identifiziert, auf dem sich das detektierte fehlerhafte Werkstück befindet. Durch Auswertung dieses Positionssignals kann die Steuereinrichtung die Hebehilfe auslösen, die das fehlerhafte Werkstück aus dem Aufnahmeplatz des Werkstückträgers hebt.

Zweckmäßig umfasst die Hebehilfe der Entnahmestation wenigstens eine Druckluftdüse, mit der ein fehlerhaftes Werkstück mittels eines Druckluftimpulses aus dem Aufnahmeplatz des Werkstückträgers aushebbar ist. Des Weiteren und unabhängig davon, ob die Hebehilfe eine Druckluftdüse ist, kann in der Entsorgungsleitung ein Unterdruck relativ zum Luftdruck der umgebenden Atmosphäre erzeugbar sein. Auf diese Weise ist das ausgehobene fehlerhafte Werkstück hineinsaugbar in die Entsorgungsleitung und kann über diese abtransportiert werden. Dies ermöglicht eine besonders schnelle, exakte und verschleißarme Arbeitsweise. Falls auf Druckluft verzichtet werden soll kann alternativ für das Ausheben eines fehlerhaften Werkstückes zum Beispiel ein mechanischer Stößel vorgesehen sein.

Einfacherweise können mehrere Druckluftdüsen in einer Reihe sowie mehrere Entsorgungsleitungen in einer Reihe vorgesehen sein. Die Druckluftdüsen liegen den Entsorgungsleitungen gegenüber, je eine Druckluftdüse liegt in einer Flucht mit einer Entsorgungsleitung. Hierdurch können mehrere Werkstücke gleichzeitig mittels der Entnahmestation entnommen werden. Ferner oder alternativ ist die Anfahrbewegung der einzelnen Werkstückpositionen auf dem Werkstückträger zur Entnahme fehlerhafter Werkstücke wesentlich erleichtert.

Zweckmäßig erstrecken sich die Reihe Druckluftdüsen und die Reihe Entsorgungsleitungen quer zur Durchlaufrichtung des Werkstückträgers. Dadurch kann auf ganzer Breite des Durchgangsbereichs jeder einzelne Aufnahmeplatz, welcher den Durchgangsbereich passiert gezielt angesteuert werden, wenn sich dort ein fehlerhaftes Werkstück befinden sollte, um ggf. dort einen Hebeimpuls zu erzeugen, der das fehlerhafte Werkstück aushebt vom Aufnahmeplatz. Nötigenfalls können mehrere Reihen Druckluftdüsen und Entsorgungsleitungen vorgesehen sein, um zweireihig fehlerhafte Werkstücke auszuheben und zu entsorgen.

Ferner betrifft die Erfindung eine erfindungsgemäße Handhabungsvorrichtung mit einer erfindungsgemäß beschriebenen Entnahmestation.

Ferner betrifft die Erfindung ein Verfahren zur Handhabung von rohrförmigen oder langgestreckten schalenförmigen Werkstücken unter Verwendung einer erfindungsgemäßen Handhabungsvorrichtung, insbesondere nach einem der Ansprüche 1 bis 10, und/oder unter Verwendung einer erfindungsgemäßen Entnahmestation, insbesondere nach einem der Ansprüche 11 oder 12, zur Handhabung der Werkstücke.

Nachstehend ist die Erfindung in einer Zeichnung beispielhaft veranschaulicht und anhand mehrerer Figuren detailliert beschrieben. Es zeigen:
- Fig. 1: einen Teil der erfindungsgemäßen Handhabungsvorrichtung ohne deren Entnahmestation, wobei sich die heb- und senkbaren Halteelementen im abgesenkten Zustand befinden (Beladeposition),
- Fig. 2: die Handhabungsvorrichtung gemäß Fig. 1 mit den Halteelementen im nach oben bewegten Zustand (Speicherposition),
- Fig. 3: eine Schnittdarstellung der Handhabungsvorrichtung in der Speicherposition gemäß Fig. 2 und über einem Werkstückträger,
- Fig. 4: eine ausschnittsweise Vergrößerung gemäß IV in Fig. 3,
- Fig. 5: eine Entnahmestation,
- Fig. 6: eine ausschnittsweise Vergrößerung gemäß VI in Fig. 5.

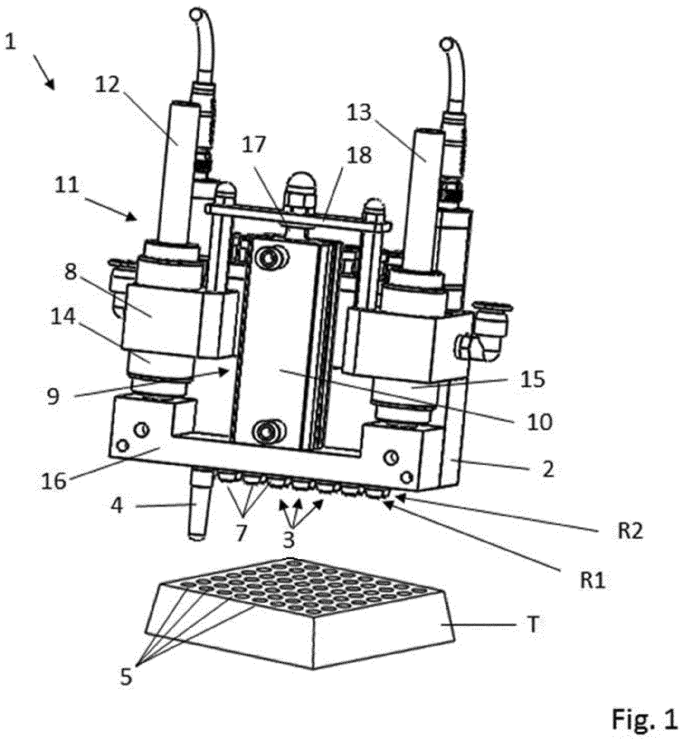

In Fig. 1 ist ein Teil einer erfindungsgemäßen Handhabungsvorrichtung gezeigt und zwar derjenige Teil, der zum Aufnehmen und Speichern von fehlerfreien Werkstücken vorgesehen ist. Er weist dafür ein Nachfüllmagazin 2 mit mehreren Magazinplätzen 3 für die einzelnen Werkstücke auf. Die vorgeschlagene Handhabungsvorrichtung ist für rohrförmige oder langgestreckte schalenförmige Werkstücke vorgesehen, wie eine Pipettenspitze oder ein Becher für eine Pipettenspitze. In Fig. 1 ist beispielhaft eine Pipettenspitze 4 gezeigt.

Des Weiteren ist in Fig. 1 ein Werkstückträger T angedeutet, der Aufnahmeplätze 5 für einzelne Pipettenspitzen aufweist. Die Aufnahmeplätze sind in einem Raster von 8 x 8 angeordnet.

In Fig. 1 ist die Handhabungsvorrichtung in einer Beladeposition dargestellt, in der eine Pipettenspitze gegriffen werden kann, wie anhand der einen dargestellten Pipettenspitze 4 erkennbar. Im Betrieb werden zweckmäßig alle freien Magazinplätze 3 gleichzeitig mit fehlerfreien Pipettenspitzen bestückt.

Das Nachfüllmagazin 2 ist des Weiteren zum Abgeben der fehlerfreien Pipettenspitzen vorgesehen, nämlich um die Bestückung der Aufnahmeplätze 5 des Werkstückträgers T zu komplettieren, wenn zuvor fehlerhafte Pipettenspitzen von ihren Aufnahmeplätzen 5 haben entfernt werden müssen. Aus dem Nachfüllmagazin 2 heraus werden fehlerfreie Pipettenspitzen 4 zu den frei gewordenen Aufnahmeplätzen 5 transferiert und komplettieren so die Bestückung des Werkstückträgers T. Um die Pipettenspitzen aus dem Nachfüllmagazin heraus zu transferieren ist eine Beschleunigungseinrichtung V vorgesehen, welche die Pipettenspitzen 4 aus einer Speicherposition im Nachfüllmagazin 2 herausbeschleunigt.

Bei der Produktion von Werkstücken wie Pipettenspitzen kommt es immer wieder zu Produktionsfehlern, unter anderem dann, wenn sie im Spritzgießverfahren produziert werden. Beispielsweise können Verschleißerscheinungen an dem Spritzgießwerkzeug auftreten. Eine erhöhte Fehlerrate führt dann zu mehr fehlerhaften Werkstücken/Pipettenspitzen, die zunächst auf den Werkstückträger gelangen und nachträglich wieder entnommen werden müssen. Das laufende Spritzgießverfahren kann nicht immer sofort gestoppt werden, um das Spritzgießwerkzeug zu reparieren. Stattdessen muss bisweilen weiterproduziert und fehlerhafte Werkstücke nachträglich im weiteren Verlauf der Produktion entnommen und mit fehlerfreien Werkstücken ersetzt werden. Die Werkstückträger T werden im Laufe der Produktion verpackt und gelangen so verpackt an Kunden. Daher ist es inakzeptabel, Aufnahmeplätze leer zu lassen, wenn fehlerhafte Werkstücke entnommen worden sind.

Eine effiziente Handhabungsvorrichtung, die fehlerhafte Werkstücke auf einem Werkstückträger durch fehlerfreie Werkstücke ersetzen kann, ist daher von großem Vorteil.

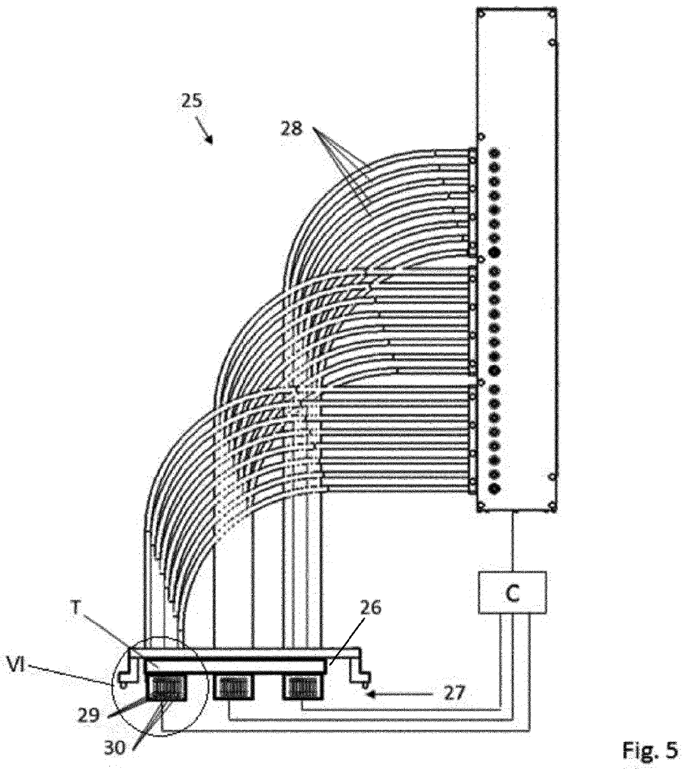

In Fig. 1 nicht dargestellt ist jener Teil der Handhabungsvorrichtung, mit dem die fehlerhaften Werkstücke von dem Werkstückträger T entfernt werden. Dieser Teil wird im Sinne der vorliegenden Erfindung als Entnahmestation bezeichnet. Ein Ausführungsbeispiel der Entnahmestation ist weiter unten anhand von Fig. 5 beschrieben.

Zunächst aber ist in Fig. 1 das schon erwähnte Nachfüllmagazin 2 dargestellt, das im vorliegenden Beispiel nebeneinanderliegend zwei Reihen R1 und R2 mit je acht Magazinplätzen 3 pro Reihe aufweist. Jeder Magazinplatz 3 umfasst eine Führungsröhre 6 und darin je ein auf und ab bewegbares Halteelement 7, das im vorliegenden Ausführungsbeispiel zum anfänglichen Ergreifen und Festhalten von Pipettenspitzen 4 hergerichtet ist. Das Nachfüllmagazin 2 kann auf diese Weise mit fehlerfreien Pipettenspitzen 4 beladen werden. Anschließend kann aus diesem Nachfüllvorrat heraus ein leerer Aufnahmeplatz 5 eines Werkstückträgers T neu bestückt werden und das wiederholt solange bis alle Magazinplätze 3 leer sind. Alle Magazinplätze des Nachfüllmagazins 2 werden dann auf einmal neu beladen, um den Vorgang wiederholen zu können und leer gewordene Aufnahmeplätze 5 eines Werkstückträgers T mit fehlerfreien Pipettenspitzen 4 zu besetzen.

Das Halteelement 7 ist innerhalb der Führungsröhre 6 geführt und dient zum Beladen des jeweiligen Magazinplatzes 3 mit einer fehlerfreien Pipettenspitze 4. Der Beladevorgang geschieht nach dem vorliegenden Ausführungsbeispiel erst dann, wenn alle Magazinplätze 3 leer sind. Es werden alle Führungsröhren 6 gleichzeitig mit neuen fehlerfreien Pipettenspitzen 4 bestückt.

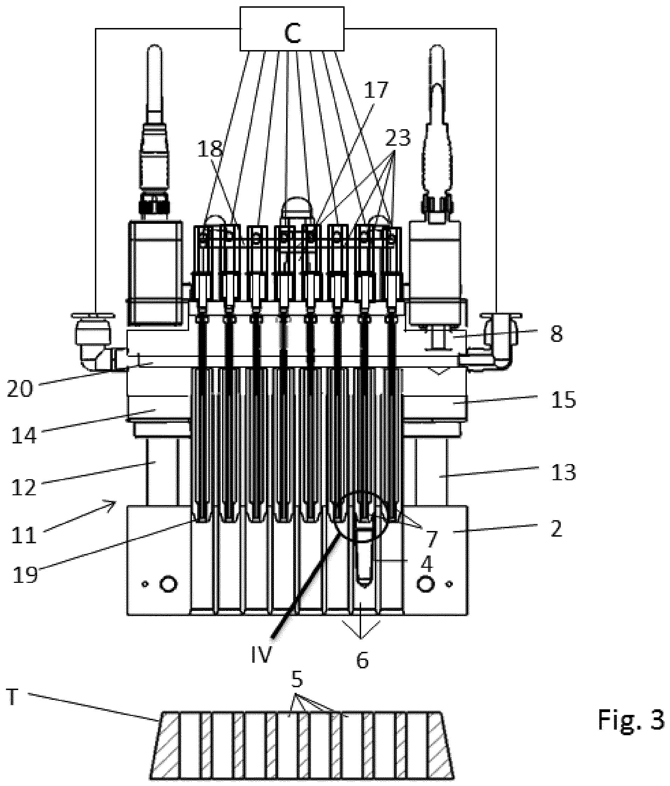

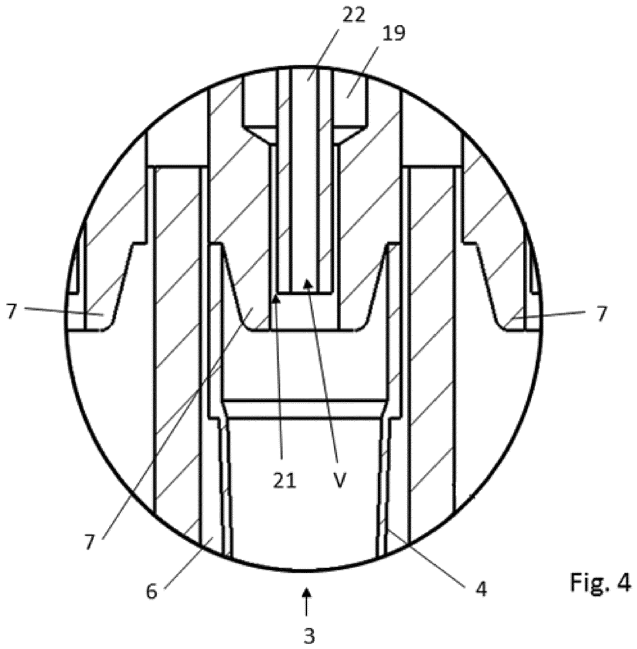

Spezielle Funktionen der Halteelemente 7, die zum Festhalten und Abgeben einer Pipettenspitze 4 vorgesehen sind, werden weiter unten anhand der Figuren 3 und 4 erläutert.

Zunächst sind weitere Details in Fig. 1 zu erkennen und zwar ein Koppelelement 8, das aufwärts und abwärts bewegbar ist. An dem Koppelelement 8 sind alle Halteelemente 7 befestigt und gemeinsam mit diesem auf- und abwärts bewegbar. Für die Auf- und Abwärtsbewegung beziehungsweise Heb- und Senkbewegung des Koppelelements 8 ist eine Hubeinrichtung 9 vorgesehen, die zum Antrieb einen Hubzylinder 10 hat. Außerdem ist sie mit einer Hubführung 11 versehen, die im vorliegenden Ausführungsbeispiel zwei Linearachsen 12 und 13 hat sowie darauf je eine verschiebbare Linearlagerung 14 beziehungsweise 15. Das Koppelelement 8 ist mit den Linearlagerungen 14/15 verbunden und lässt sich auf diese Weise geführt entlang den Linearachsen 12/13 aufwärts- und abwärts bewegen. Seitlich ist an dem Nachfüllmagazin 2 ein Verbindungselement 16 angeordnet, das den Hubzylinder 10 trägt und an dem auch die Linearachsen 12 und 13 befestigt sind. Der Hubzylinder 10 hat eine Kolbenstange 17. Aufgrund des benötigten Hubs weist der Hubzylinder eine Abmessung auf, die so ist, dass seine Kolbenstange 17 nicht unmittelbar an dem Koppelelement 8 angebracht werden kann, sondern stattdessen an einer Brücke 18 oberhalb des Koppelelements 8 befestigt ist. Die Brücke 18 wiederum hat an jedem Ende einen Distanzbolzen 19 beziehungsweise 20, der sie mit dem Koppelelement 8 verbindet. In Fig. 1 ist der Hubzylinder 10 im eingefahrenen Zustand der Kolbenstange 17 gezeigt. Das Koppelelement 8 nimmt seine tiefste Position ein, womit einhergeht, dass die freien Enden der Halteelemente 7 unten an der Öffnung der Führungsröhren 6 zu sehen sind und dort etwas aus der jeweiligen Führungsröhre 6 herausragen. Damit werden die bereitgestellten Pipettenspitzen zentriert und das Halteelement 7 kann eine neue Pipettenspitze 4 zentriert erfassen.

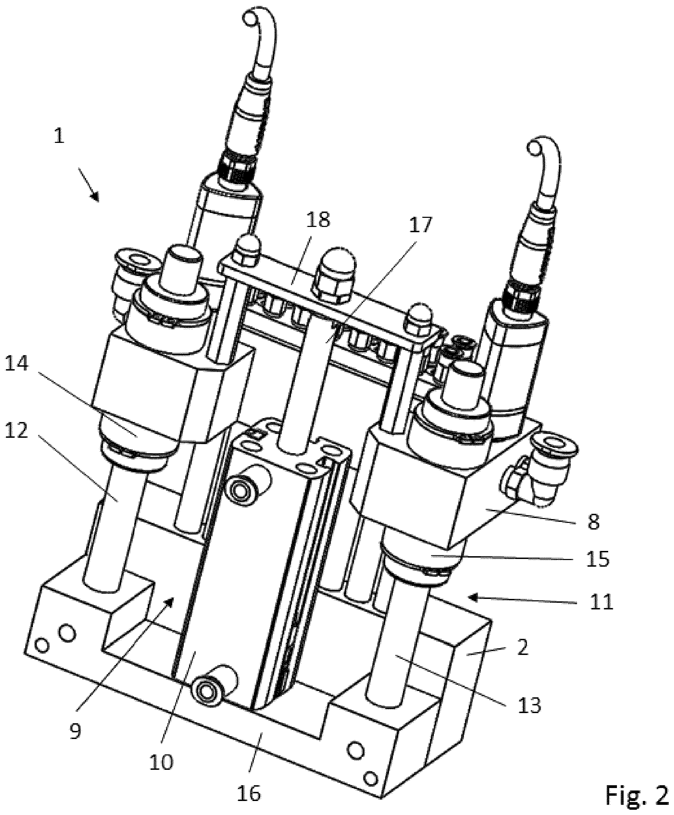

Fig. 2 zeigt denselben Teil der Handhabungsvorrichtung 1, wie Fig. 1, jedoch ist der Hubzylinder 10 nun in seinem ausgefahrenen Zustand gezeigt mit ausgefahrener Kolbenstange 17. Dadurch ist das Koppelelement 8 aufwärtsbewegt und nimmt seine höchste Position ein. Die beiden verschiebbaren Linearlagerungen 14 und 15 haben die Bewegung an der jeweiligen Linearachse 12 beziehungsweise 13 exakt nach oben geführt. Gleichzeitig haben sich die Halteelemente 7 in den Führungsröhren 6 aufwärtsbewegt. Die Pipettenspitze 4 aus Fig. 1 ist ganz in die Führungsröhre 6 eingetaucht und von außen nicht mehr sichtbar. Sie hat ihre Speicherposition im Magazinplatz 3 des Nachfüllmagazins 2 erreicht.

Als nächstes ist in Fig. 3 die Handhabungsvorrichtung 1 in derselben Speicherposition, wie in Fig. 2 gezeigt und zwar als eine Schnittdarstellung. Zu erkennen ist eine Reihe der Führungsröhren 6 im Schnitt sowie die darin befindlichen Halteelemente 7. Die Halteelemente 7 sind in ihrer aufwärtsbewegten Position innerhalb der jeweiligen Führungsröhre 6 gezeigt, also in der Speicherposition.

Jedes Halteelement 7 hat im Wesentlichen drei Funktionen. Eine Funktion ist die schon erwähnte Auf- und Abwärtsbeweglichkeit innerhalb der Führungsröhre 6. Eine weitere Funktion ist das Festhalten eines Werkstücks, wie der Pipettenspitze 4. Zum Zweck des Festhaltens hat beim vorliegenden Ausführungsbeispiel jedes Halteelement 7 eine Ansaugdüse 19. Die Ansaugdüsen 19 aller Halteelemente 7 derselben Reihe sind an einer gemeinsamen Saugleitung 20 angeschlossen (Common-Rail-Prinzip), was als einfache Lösung angesehen wird. Alternativ können Ansaugdüsen auch über einzelne Saugleitungen oder zu Gruppen zusammengefasst über mehrere Saugleitungen angeschlossen sein. Durch das Common-Rail-Prinzip im vorliegenden Beispiel sind alle Magazinplätze 3 dieser Reihe gleichzeitig beladbar. Es ist eine Steuereinrichtung C vorgesehen, welche zu diesem Zweck das Ein- und Ausschalten der Saugleitung 20 steuert.

Die Ansaugdüsen 19 der Halteelemente 7 sind ringförmig ausgebildet. Sie haben einen Ringspalt 21 und sind koaxial um eine zentrale Druckluftdüse 22 herum angeordnet, wie am besten in dem vergrößerten Ausschnitt gemäß Fig. 4 erkennbar ist. Die zentrale Druckluftdüse 22 ist Teil der Beschleunigungseinrichtung V, mit welcher ein im Magazinplatz 3 gespeichertes Werkstück wie die Pipettenspitze 4 aus der Führungsröhre 6 herausgestoßen werden kann. Das in Fig. 4 gezeigte Halteelement 7 ist mit der festgehaltenen Pipettenspitze 4 in die Führungsröhre 6 ganz hineinbewegt. So befindet sich die Pipettenspitze 4, respektive das Halteelement 7 in der Speicherposition.

Jede Druckluftdüse 22 ist an einen Druckluftvorrat angeschlossen (nicht dargestellt). Zwischen dem Druckluftvorrat und der Druckluftdüse 22 ist je ein pneumatisches Schaltventil 23 angeordnet. Durch Öffnen und Schließen des Schaltventils 23 kann per Druckluftstoß dem Werkstück ein Bewegungsimpuls verliehen werden, der es aus der Führungsröhre 6 befördert. Anders als die Ansaugdüsen 19 sind die zentralen Druckluftdüsen 22 alle separat ansteuerbar, weil jeder Druckluftdüse ein eigenes Schaltventil 23 zugeordnet ist, das unabhängig von den Schaltventilen der anderen Druckluftdüsen individuell betätigt werden kann. Für die Betätigung der Schaltventile 23 ist ebenfalls die Steuereinrichtung C vorgesehen. Wenn das Nachfüllmagazin 2 noch voll ist und eine Pipettenspitze 4 herausgeschossen werden soll, dann liegt in der Saugleitung 25 und den Ansaugdüsen immer noch der Unterdruck an und die Ansaugdüsen 19 halten die verbliebenen Pipettenspitzen per Unterdruck fest. Bei derjenigen Pipettenspitze, die herausgeschossen werden soll, muss daher der vom Schaltventil entlassene Druckluftstoß gegen den Unterdruck in der betreffenden Ansaugdüse 19 arbeiten, um die Pipettenspitze zuverlässig herausbefördern zu können. Daher sind Druck und Dauer des Druckluftstoß entsprechend einjustiert. Der Druckluftvorrat kann ein gemeinsamer Druckluftvorrat sein, wie im vorliegenden Ausführungsbeispiel.

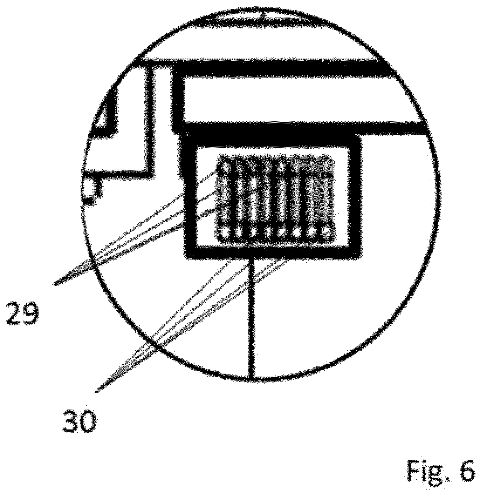

Schließlich zeigen Fig. 5 und Fig. 6 ein Beispiel für eine Entnahmestation 25, mit welcher fehlerhafte Werkstücke wie Pipettenspitzen oder Becher aus einem Werkstückträger T entnommen werden können, um leer gewordene Aufnahmeplätze 5 des Werkstückträgers T mit neuen fehlerfreien Werkstücken/Pipettenspitzen neu besetzen zu können.

Die Entnahmestation 25 hat einen Durchgangsbereich 26 für einen Werkstückträger T. Der Werkstückträger T weist eine definierte Rasteranordnung auf, die im Prinzip beliebig und im vorliegenden Beispiel mit 8 x 8 Aufnahmeplätzen 5 für Werkstücke versehen ist. In Fig. 5 ist ein Querschnitt des Durchgangsbereichs 26 gezeigt, in dem sich ein Werkstückträger T befindet. Unterhalb des Durchgangsbereichs 26 ist eine Hebehilfe 27 angeordnet, die zum Ausheben fehlerhafter Werkstücke aus dem Werkstückträger T dient. Oberhalb des Durchgangsbereichs 26 sind mehrere Entsorgungsleitungen 28, die zum Abtransport ausgehobener fehlerhafter Werkstücke dienen.

Die Hebehilfe 27 der Fig. 5 umfasst mehrere Druckluftdüsen 29, die in einer Reihe angeordnet sind. Ihre Anzahl entspricht der Anzahl der Aufnahmeplätze 5 in einer Reihe des gezeigten Werkstückträgers T und zwar in der dargestellten Schnittebene betrachtet. Der Werkstückträger T umfasst hintereinanderliegend acht Reihen mit je acht Aufnahmeplätzen pro Reihe. Wenn der Werkstückträger T durch den Durchgangsbereich 26 der Entnahmestation 25 transportiert wird, dann passiert jeder einzelne Aufnahmeplatz 5 eine der Druckluftdüsen 29.

Wie am besten in dem vergrößerten Ausschnitt der Fig. 6 zu sehen, wird jede Druckluftdüse 29 mittels der Steuereinrichtung C und einem Schaltventil 30 betätigt. Die Betätigung der Druckluftdüse geschieht immer rechtzeitig dann, wenn ein fehlerhaftes Werkstück ankommt und sich so nah in der Flucht der Druckluftdüse 29 befindet, dass ein Druckluftstoß das Werkstück zuverlässig aus seinem Aufnahmeplatz 5 heben und zuverlässig in die Entsorgungsleitung 28 oberhalb der Druckluftdüse 29 gelangen kann. Des Weiteren wird der Vorgang der Entsorgung unterstützt, indem in der Entsorgungsleitung 28 ein Unterdruck relativ zum Luftdruck der umgebenden Atmosphäre erzeugt wird. Der Unterdruck kann permanent bereitgestellt sein oder die Steuereinrichtung C schaltet den Unterdruck in der Entsorgungsleitung 28 nur im Bedarfsfall ein, wenn ein fehlerhaftes Werkstück an der Stelle ankommt, an der die Entsorgungsleitung 28 und die Druckluftdüse 29 fluchten.

### Bezugszeichenliste

- 1: Handhabungsvorrichtung
- 2: Nachfüllmagazin
- 3: Magazinplatz
- 4: Pipettenspitze
- 5: Aufnahmeplatz
- 6: Führungsröhre
- 7: Halteelemente
- 8: Koppelelement
- 9: Hubeinrichtung
- 10: Hubzylinder
- 11: Hubführung
- 12: Linearachse
- 13: Linearachse
- 14: Linearlagerung
- 15: Linearlagerung
- 16: Verbindungselement
- 17: Kolbenstange
- 18: Brücke
- 19: Ansaugdüse
- 20: Saugleitung
- 21: Ringspalt
- 22: Druckluftdüse
- 23: pneumatisches Schaltventil

- 25: Entnahmestation
- 26: Durchgangsbereich
- 27: Hebehilfe
- 28: Entsorgungsleitung
- 29: Druckluftdüse
- 30: Schaltventil

- C: Steuereinrichtung
- R1: Reihe
- R2: Reihe
- T: Werkstückträger
- V: Beschleunigungseinrichtung

## Patentansprüche

1. Handhabungsvorrichtung (1) für rohrförmige oder langgestreckte schalenförmige Werkstücke wie Pipettenspitzen (4) oder Becher, wobei vorzugsweise diese Werkstücke während ihrer Produktion bis zur Verpackung auf einem Werkstückträger (T) transportiert werden oder transportierbar sind, wobei der Werkstückträger (T) rasterförmig zueinander angeordnete Aufnahmeplätze (5) für die Werkstücke hat, vorzugsweise mit der Maßgabe, dass auf dem Werkstückträger (T) befindliche fehlerhafte Werkstücke detektierbar sind, und vorzugsweise mit der Maßgabe, dass eine Entnahmestation (25) vorgesehen ist, mit welcher die fehlerhaften Werkstücke von den Aufnahmeplätzen (5) eines Werkstückträgers (T) entfernbar sind, so dass Aufnahmeplätze (5) frei werden, wobei frei gewordene Aufnahmeplätze (5) des Werkstückträgers (T) mittels der Handhabungsvorrichtung mit fehlerfreien Werkstücken bestückbar sind, wobei die Handhabungsvorrichtung ein Nachfüllmagazin (2) umfasst, das nebeneinander angeordnete Magazinplätze (3) mit je einem auf und ab bewegbaren Halteelement (7) aufweist, welches zum Festhalten sowie zur Aufnahme und Abgabe je eines fehlerfreien Werkstücks dient, mit der weiteren Maßgabe, dass jeder Magazinplatz (3) eine Führungsröhre (6) umfasst, in der die Auf- und Abbewegung des Halteelements (7) stattfindet, dass das Halteelement (7) in der Führungsröhre (6) geführt und teilweise aus der Führungsröhre (6) herausbewegbar und zumindest teilweise gemeinsam mit einem festgehaltenen Werkstück in die Führungsröhre (6) hineinbewegbar ist, und dass eine Beschleunigungseinrichtung (V) vorgesehen ist, mit der das Werkstück aus der Führungsröhre (6) herausbeschleunigt werden kann und zu einem Aufnahmeplatz (5) des Werkstückträgers (T) bewegbar ist.

2. Handhabungsvorrichtung (1) nach Anspruch 1, **dadurch gekennzeichnet, dass** die Beschleunigungseinrichtung (V) jeweils mit einem Federdruckelement oder einer Druckluftdüse (22) versehen ist, so dass dann, wenn das Halteelement (7) in die Führungsröhre (6) hineinbewegt ist, mittels der Beschleunigungseinrichtung (V) ein Kraftstoß auf das Werkstück übertragbar ist.

3. Handhabungsvorrichtung nach Anspruch 2 mit einer Druckluftdüse, **dadurch** g**ekennzeichnet**, dass ein Druckluftvorrat vorgesehen ist sowie ein pneumatisches Schaltventil (23), um dem Werkstück per Druckluftstoß einen Bewegungsimpuls zu verleihen.

4. Handhabungsvorrichtung nach einem der Ansprüche 1 bis 3 **dadurch gekennzeichnet, dass** jedes heb- und senkbare Halteelement (7) mit einer zusätzlichen Ansaugdüse (19) versehen ist, mit der das Nachfüllmagazin mit (2) mit fehlerfreien Werkstücken beladbar ist.

5. Handhabungsvorrichtung nach Anspruch 4, **dadurch gekennzeichnet, dass** die Ansaugdüsen (19) mehrerer der heb- und senkbaren Halteelemente (7) über eine gemeinsame Saugleitung (20) verbunden sind.

6. Handhabungsvorrichtung nach einem der Ansprüche 4 bis 5, **dadurch gekennzeichnet, dass** die Druckluftdüse (22) und die Ansaugdüse (19) jeweils koaxial an dem heb- und senkbaren Halteelement (7) angeordnet sind.

7. Handhabungsvorrichtung nach einem der Ansprüche 1 bis 6, **dadurch gekennzeichnet, dass** eine Hubeinrichtung (9) vorgesehen ist, mit der wenigstens eines der heb- und senkbaren Halteelemente (7) auf- und abwärtsbewegbar ist.

8. Handhabungsvorrichtung nach Anspruch 7, **dadurch gekennzeichnet, dass** die Hubeinrichtung (9) ein heb- und senkbares Koppelelement (8) aufweist, dass mehrere oder alle der heb- und senkbaren Halteelemente (7) mit dem Koppelelement (8) verbunden sind.

9. Handhabungsvorrichtung nach Anspruch 8, **dadurch gekennzeichnet, dass** die Hubeinrichtung (9) eine Hubführung (11) für das heb- und senkbare Koppelelement (8) vorsieht sowie einen Hubzylinder (10) zum Antrieb der Heb- und Senkbewegung des Koppelelements (8).

10. Handhabungsvorrichtung nach einem der Ansprüche 4 bis 9, **dadurch gekennzeichnet, dass** eine Steuereinrichtung (C) vorgesehen ist, über welche die gemeinsame Saugleitung (20) für die Ansaugdüsen (19) dann zuschaltbar ist, wenn das Koppelelement (8) eine abgesenkte Position einnimmt, und dass mittels der Steuereinrichtung (C) die Druckluftdüsen (22) individuell betätigbar sind.

11. Entnahmestation (25) für fehlerhafte rohrförmige oder schalenförmige Werkstücke wie Pipettenspitzen (4) oder Becher, umfassend wenigstens einen Werkstückträger (T) mit rasterförmig angeordneten nach oben offenen Aufnahmeplätzen für die Werkstücke, umfassend eine Hebehilfe (27) zum Ausheben fehlerhafter Werkstücke aus dem Werkstückträger (T) sowie umfassend eine Entsorgungsleitung (28) zum Abtransport ausgehobener fehlerhafter Werkstücke durch die Entsorgungsleitung hindurch, wobei mittels der Hebehilfe (27) ausgehobene Werkstücke in die Entsorgungsleitung (28) gelangen, und wobei zwischen der Entsorgungsleitung (28) und der Hebehilfe (27) ein Durchgangsbereich (26) für den Werkstückträger (T) vorgesehen ist.

12. Entnahmestation (25) nach Anspruch 11, **dadurch gekennzeichnet, dass** die Hebehilfe (27) wenigstens eine Druckluftdüse (29) umfasst, mit der ein fehlerhaftes Werkstück mittels eines Druckluftimpulses aus dem Aufnahmeplatz (5) des Werkstückträgers (T) aushebbar ist, dass in der Entsorgungsleitung (28) ein Unterdruck relativ zum Luftdruck der umgebenden Atmosphäre erzeugbar ist, und dass mit dem Unterdruck ein ausgehobenes fehlerhaftes Werkstück in die Entsorgungsleitung (28) hineinsaugbar und abtransportierbar ist.

13. Handhabungsvorrichtung (1) nach einem der Ansprüche 1 bis 10 mit einer Entnahmestation (25) nach einem der Ansprüche 11 oder 12.

14. Verfahren zur Handhabung von rohrförmigen oder langgestreckten schalenförmigen Werkstücken unter Verwendung einer Handhabungsvorrichtung (1) nach einem der Ansprüche 1 bis 10 und/oder einer Entnahmestation (25) nach einem der Ansprüche 11 oder 12 zur Handhabung der Werkstücke.

## Claims

1. Handing device (1) for tubular or elongate bowl-shaped workpieces, like pipette tips (4) or cups, said workpieces being preferably transported or being able to be transported on a workpiece carrier (T) during their production up to their packaging, the workpiece carrier (T) having receptacles (5) arranged in a grid relative to each other for the workpieces, preferably with the proviso that faulty workpieces located on the workpiece carrier (T) can be detected, and preferably with the proviso that a removal station (25) is provided, with which the faulty workpieces can be removed from the receptacles (5) of a workpiece carrier (T) so that receptacles (5) become available, receptacles (5) of the workpiece carrier (T) that have become available are able to be populated with flawless workpieces by means of the handling device, the handling device comprising a refill magazine (2) which has magazine slots (3) arranged adjacent to each other, each magazine slot having a holding element (7) able to be moved up and down, said holding element functioning for holding, and for receiving and dispensing a flawless workpiece in each case, with the further proviso that each magazine slot (3) comprises a guide tube (6) in which the up and down movement of the holding element (7) takes place, that the holding element (7) is guided in the guide tube (6) and can be moved partially out of the guide tube (6), and can be moved at least partially, together with a held workpiece, into the guide tube (6), and that an acceleration device (V) is provided, with which the workpiece can be accelerated out of the guide tube (6) and can be moved to a receptacle (5) of the workpiece carrier (T).

2. Handling device (1) according to claim 1, **characterized in that** the acceleration device (V) is provided in each case with a spring pressure element or a compressed air nozzle (22) so that, when the holding element (7) is moved into the guide tube (6), a force impact can be transferred to the workpiece by means of the acceleration device (V).

3. Handling device according to claim 2 with a compressed air nozzle, **characterized in that** a compressed air supply is provided and also a pneumatic switching valve (23) in order to provide a movement impulse to the workpiece via a burst of compressed air.

4. Handling device according to one of claims 1 to 3, **characterized in that** each raisable and lowerable holding element (7) is provided with an additional suction nozzle (19), with which the refill magazine (2) can be loaded with flawless workpieces.

5. Handling device according to claim 4, **characterized in that** the suction nozzles (19) are connected to multiple raisable and lowerable holding elements (7) via one common suction line (20).

6. Handling device according to one of claims 4 to 5, **characterized in that** the compressed air nozzle (22) and the suction nozzle (19) are each arranged coaxial to the raisable and lowerable holding element (7).

7. Handling device according to one of claims 1 to 6, **characterized in that** a lifting device (9) is provided, with which at least one of the raisable and lowerable holding elements (7) can be moved up and down.

8. Handling device according to claim 7, **characterized in that** the lifting device (9) has a raisable and lowerable coupling element (8), and that multiple or all of the raisable and lowerable holding elements (7) are connected to the coupling element (8).

9. Handling device according to claim 8, **characterized in that** the lifting device (9) provides a lifting guide (11) for the raisable and lowerable coupling element (8) and also a lift cylinder (10) for driving the raising and lowering movement of the coupling element (8).

10. Handling device according to one of claims 4 to 9, **characterized in that** a control device (C) is provided, via which the common suction line (20) for the suction nozzles (19) can be switched when the coupling element (8) assumes a lowered position, and that the compressed air nozzles (22) can be individually actuated by means of the control device (C).

11. Removal station (25) for faulty tubular or elongate bowl-shaped workpieces, like pipette tips (4) or cups, comprising at least one workpiece carrier (T) having receptacles, arranged in a grid relative to each other and open at the top, for the workpieces, comprising a lifting aid (27) for lifting faulty workpieces out of the workpiece carried (T), and also comprising a disposal line (28) for the removal of lifted, faulty workpieces through the disposal line, lifted workpieces arriving into the disposal line (28) by means of the lifting aid (27), and a through passage area (26) for the workpiece carrier (T) being provided between the disposal line (28) and the lifting aid (27).

12. Removal station (25) according to claim 11, **characterized in that** the lifting aid (27) comprises at least one compressed air nozzle (29), with which a faulty workpiece can be lifted out of the receptacle (5) of the workpiece carrier (T) by means of a burst of compressed air, that a negative pressure relative to the air pressure of the surrounding atmosphere can be generated in the disposal line (28), and that a lifted, faulty workpiece can be suctioned into the disposal line (28) and can be removed using the negative pressure.

13. Handling device (1) according to one of claims 1 to 10 having a removal station (25) according to one of claims 11 or 12.

14. Method for handling tubular or elongate bowl-shaped workpieces using a handling device (1) according to one of claims 1 to 10 and/or a removal station (25) according to one of claims 11 or 12 for handing the workpieces.

## Revendications

1. Dispositif de manipulation (1) de pièces tubulaires ou cupuliformes allongées, telles que des pointes (4) de pipettes ou des gobelets, de préférence, pendant leur production, jusqu'à l'emballage, lesdites pièces étant transportées ou transportables sur un porte-pièces (T), le porte-pièces (T) possédant des emplacements de logement (5) pour les pièces, placés mutuellement en forme de trame, de préférence avec le critère que des pièces défectueuses se trouvant sur le porte-pièces (T) soient détectables et de préférence avec le critère qu'il soit prévu un poste de prélèvement (25), à l'aide duquel les pièces défectueuses peuvent se retirer des emplacements de logement (5) d'un porte-pièces (T), de sorte à libérer des emplacements de logement (5), des emplacements de logement (5) du porte-pièces (T) alors libérés pouvant être chargés au moyen du dispositif de manipulation avec des pièces irréprochables, le dispositif de manipulation comprenant un magasin (2) de rechargement, qui comporte des emplacements (3) de magasin placés côte à côté, pourvus chacun d'un élément de maintien (7) déplaçable vers le haut et vers le bas, lequel sert à retenir et à recevoir et à restituer chaque fois une pièce irréprochable, avec le critère supplémentaire que chaque emplacement (3) de magasin comprenne un tube de guidage (6), dans lequel a lieu le déplacement vers le haut et vers le bas de l'élément de maintien (7), que l'élément de maintien (7) soit guidé dans le tube de guidage (6) et puisse être déplacé au moins partiellement hors du tube de guidage (6) et puisse être déplacé au moins partiellement avec une pièce qu'il maintient dans le tube de guidage (6) et en ce qu'il soit prévu un système d'accélération (V), à l'aide duquel la pièce peut être accélérée hors du tube de guidage (6) et déplacée vers un emplacement de logement (5) du porte-pièces (T).

2. Dispositif de manipulation (1) selon la revendication 1, **caractérisé en ce que** le système d'accélération (V) est muni chaque fois d'un élément de pression à ressort ou d'une buse à air comprimé (22), de sorte que lorsque l'élément de maintien (7) est déplacé dans le tube de guidage (6), au moyen du système d'accélération (V), une poussée soit transmissible sur la pièce.

3. Dispositif de manipulation selon la revendication 2, pourvu d'une buse à air comprimé, **caractérisé en ce qu'**il est prévu une réserve d'air comprimé, ainsi qu'une soupape de commande (23) pneumatique, pour conférer à la pièce par poussée d'air comprimé une impulsion de déplacement.

4. Dispositif de manipulation selon l'une quelconque des revendications 1 à 3, **caractérisé en ce que** chaque élément de maintien (7) susceptible d'être relevé et abaissé est muni d'une buse d'aspiration (19) supplémentaire, à l'aide de laquelle le magasin (2) de rechargement peut être chargé de pièces irréprochables.

5. Dispositif de manipulation selon la revendication 4, **caractérisé en ce que** les buses d'aspiration (19) de plusieurs des éléments de maintien (7) susceptibles d'être relevés et abaissés sont reliées par l'intermédiaire d'une conduite d'aspiration (20) commune.

6. Dispositif de manipulation selon l'une quelconque des revendications 4 à 5, **caractérisé en ce que** la buse à air comprimé (22) et la buse d'aspiration (19) sont placées chacune de manière coaxiale sur l'élément de maintien (7) susceptible d'être relevé et abaissé.

7. Dispositif de manipulation selon l'une quelconque des revendications 1 à 6, **caractérisé en ce qu'**il est prévu un système de levage (9), à l'aide duquel au moins l'un des éléments de maintien (7) susceptibles d'être relevés et abaissés est déplaçable vers le haut et vers le bas.

8. Dispositif de manipulation selon la revendication 7, **caractérisé en ce que** le système de levage (9) comporte un élément de couplage (8) susceptible d'être relevé et abaissé, **en ce que** plusieurs des ou tous les éléments de maintien (7) susceptibles d'être relevés et abaissés sont reliés avec l'élément de couplage (8).

9. Dispositif de manipulation selon la revendication 8, **caractérisé en ce que** le système de levage (9) prévoit un guidage en levée (11) pour l'élément de couplage (8) susceptible d'être relevé et abaissé, ainsi qu'un vérin de levage (10), destiné à entraîner le déplacement de levage et d'abaissement de l'élément de couplage (8).

10. Dispositif de manipulation selon l'une quelconque des revendications 4 à 9, **caractérisé en ce qu'**il est prévu un système de commande (C), par l'intermédiaire duquel la conduite d'aspiration (20) commune pour les buses d'aspiration (19) peut être connectée lorsque l'élément de couplage (8) adopte une position abaissée et **en ce qu'**au moyen du système de commande (C), les buses à air comprimé (22) sont actionnables individuellement.

11. Poste de prélèvement (25) de pièces tubulaires ou cupuliformes défectueuses, telles que des pointes (4) de pipettes ou des gobelets, comprenant au moins un porte-pièces (T), pourvu d'emplacements de logement ouverts vers le haut, placés en forme de trame pour les pièces, comprenant un auxiliaire de levage (27), destiné à évacuer vers le haut des pièces défectueuses hors du porte-pièces (T) et comprenant aussi une conduite d'évacuation, destinée à emporter des pièces défectueuses évacuées à travers la conduite d'évacuation, des pièces évacuées par le haut arrivant dans la conduite d'évacuation (28) au moyen de l'auxiliaire de levage (27) et entre la conduite d'évacuation (28) et l'auxiliaire de levage (27) étant prévue une zone de passage (26) pour le porte-pièces (T).

12. Poste de prélèvement (25) selon la revendication 11, **caractérisé en ce que** l'auxiliaire de levage (27) comprend au moins une buse à air comprimé (29), à l'aide de laquelle une pièce défectueuse peut être relevée au moyen d'une impulsion d'air comprimé hors de l'emplacement de logement (5) du porte-pièces (T), **en ce que** dans la conduite d'évacuation (28) peut être générée une dépression par rapport à la pression d'air de l'atmosphère environnante et **en ce qu'**à l'aide de la dépression, une pièce défectueuse évacuée par le haut peut être aspirée dans la conduite d'évacuation (28) et emportée.

13. Dispositif de manipulation (1) selon l'une quelconque des revendications 1 à 10, pourvu d'un poste de prélèvement (25) selon l'une quelconque des revendications 11 ou 12.

14. Procédé, destiné à manipuler des pièces tubulaires ou cupuliformes allongées en utilisant un dispositif de manipulation (1) selon l'une quelconque des revendications 1 à 10 et / ou un poste de prélèvement (25) selon l'une quelconque des revendications 11 ou 12 pour la manipulation des pièces.
